(19) Europäisches Patentamt
European Patent Office
Office européen des brevets

(11) **EP 3 652 525 B1**

(12) **FASCICULE DE BREVET EUROPEEN**

(45) Date de publication et mention
de la délivrance du brevet:
**05.07.2023 Bulletin 2023/27**

(21) Numéro de dépôt: **18749041.2**

(22) Date de dépôt: **12.07.2018**

(51) Classification Internationale des Brevets (IPC):
***G01N 22/04*** *(2006.01)*

(52) Classification Coopérative des Brevets (CPC):
**G01N 22/04**

(86) Numéro de dépôt international:
**PCT/FR2018/051766**

(87) Numéro de publication internationale:
**WO 2019/012232 (17.01.2019 Gazette 2019/03)**

(54) **PROCEDE DE QUANTIFICATION DE L'HUMIDITE DANS UN MATELAS DE FIBRES**

VERFAHREN ZUR QUANTIFIZIERUNG DER FEUCHTIGKEIT IN EINER FASERMATTE

METHOD FOR QUANTIFYING THE MOISTURE IN A MAT OF FIBRES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2017 FR 1770753**

(43) Date de publication de la demande:
**20.05.2020 Bulletin 2020/21**

(73) Titulaire: **SAINT-GOBAIN ISOVER**
**92400 Courbevoie (FR)**

(72) Inventeurs:
• **D'HERIN BYTNER, Frédéric**
**75010 Paris (FR)**
• **ROUBIN, Marc**
**84350 Courthezon (FR)**
• **SOTERAS, Fiona**
**26200 Ancone (FR)**
• **COSSALTER, Laure**
**60370 Saint Félix (FR)**

• **GAUBIL, Michel**
**30133 Les Angles (FR)**

(74) Mandataire: **Saint-Gobain Recherche**
**B.P. 135**
**39, quai Lucien Lefranc**
**93303 Aubervilliers Cedex (FR)**

(56) Documents cités:
**WO-A2-2006/023137 US-A1- 2012 144 868**

• **KUPFER K ED: "Microwave Moisture Measurement Systems and Their Applications", 1 janvier 2000 (2000-01-01), SENSORS UPDATE - SPECIAL TOPIC: RF & MICROWAVE SENSING OF MOIST MATERIALS, WILEY-VCH, WEINHEIM, GERMANY, PAGE(S) 343 - 376, XP002639590, ISBN: 978-3-527-29821-1 page 353, alinéa 1 - page 356, alinéa 1 tableau 14.1 figure 14.5**

**Description**

L'invention concerne les produits à base de fibres, notamment à base de fibres minérales ou végétales, par exemple des fibres de roche, de verre, de coton, de bois ou de chanvre, et en particulier de tels produits fabriqués à base d'un matelas de fibres liées par un liant.

L'invention concerne, plus spécifiquement, un procédé de quantification de l'humidité dans un tel matelas de fibres, et un procédé de fabrication d'un produit à base de fibres liées par un liant, utilisant ledit procédé.

Des produits d'isolation commercialisés à l'heure actuelle sont typiquement constitués de panneaux, plaques, rouleaux ou produits de forme tubulaire ou autre obtenus à partir d'un matelas de fibres, par exemple de fibres minérales telles que des fibres de verre ou des fibres de roche, consolidé par un liant organique ou minéral.

Le procédé de fabrication d'un tel matelas de fibres est bien connu et comprend généralement la succession d'étapes suivantes :

- la fusion de la matière minérale,
- la transformation en fibres aussi appelée fibrage, par exemple par une technique de fibrage dite rotative utilisant des organes de fibrages en rotation,
- l'ajout d'un liant sur les fibres,
- la collecte des fibres imprégnées du liant habituellement dans une chambre de réception comprenant à l'opposé du dispositif de fibrage un convoyeur muni dans sa partie inférieure de caissons d'aspirations maintenus en dépression,
- le convoyage des fibres sur une surface de réception, sous forme de couche plus ou moins épaisse appelée matelas,
- généralement un traitement thermique de réticulation ou polymérisation, réalisé dans une étuve, destiné à donner au matelas sa cohésion,
- une préparation finale des produits résultants.

Dans le cadre du contrôle du procédé de fabrication tel qu'il vient d'être décrit, il est nécessaire d'effectuer en continu des procédures de contrôle, sur au moins une partie et de préférence sur la totalité de la production, pour garantir une bonne qualité du matelas.

La demande de brevet WO 2006/023137 décrit par exemple un procédé de contrôle du procédé basé sur une mesure par des moyens spectroscopiques de l'humidité présente dans le matelas de fibres imprégné du liant, avant le traitement thermique de réticulation du liant dans l'étuve. Par comparaison du taux d'humidité mesuré avec une valeur de référence, l'ajustement d'au moins un paramètre permet le contrôle en continu du procédé.

Il est à noter que l'importance et la nécessité d'un procédé de contrôle efficace dans les procédés de fabrication des matelas de fibres minérales sont encore renforcées à l'heure actuelle en raison de la volonté de développer, en substitution aux résines formo-phénoliques utilisées aujourd'hui, des liants alternatifs permettant de réduire les risques de dégagement de formaldéhyde lors de la cuisson du liant. Dans ce cadre, on étudie actuellement des liants de nature chimique différente, notamment obtenus à partir de polymères polycarboxyliques et de polyols tels que les résines acryliques, par exemple tels que décrits dans la demande WO 2006/023137.

Avec ces liants alternatifs encore plus qu'avec les liants formo-phénoliques, le contrôle et l'optimisation de la quantité d'eau et de sa répartition dans le produit non cuit est essentiel pour la maîtrise du procédé afin de garantir la qualité voulue sur le produit final.

En effet, pour éviter une polymérisation et une prise trop précoce des liants alternatifs et pour en diminuer la viscosité, il est nécessaire d'augmenter sensiblement, par rapport aux liants formo-phénoliques, la proportion d'eau présente dans la solution ajoutée aux fibres, ce qui entraîne des difficultés accrues au niveau de l'élimination de l'eau résiduelle potentiellement présente en sortie de ligne sur le produit fini, et rend ainsi plus indispensable encore la présence de moyens de contrôle précis.

La présente invention a pour objectif d'améliorer la précision des contrôles et de la régulation sur les lignes de fabrication de produits à base de fibres liées par un liant, de façon à garantir une qualité optimale du produit final.

En premier lieu, l'invention a pour objet un procédé de quantification de l'humidité dans un matelas de fibres, notamment un matelas de fibres se déplaçant selon un plan de défilement (X, Y) et une direction de défilement (X), comprenant :

- l'émission d'une onde électromagnétique incidente en direction du matelas, par au moins un émetteur,
- la réception de l'onde électromagnétique transmise par le matelas, par au moins un récepteur,
- l'identification d'une variation d'au moins un paramètre de l'onde transmise par rapport à l'onde incidente,
- la détermination d'une valeur représentative de l'humidité dans le matelas de fibres, en fonction de ladite variation et du volume efficace de matelas ayant effectivement interagi avec l'onde incidente.

Une onde électromagnétique traversant un matelas de fibres voit certains de ses paramètres modifiés lors de cette traversée. Ces modifications sont fonction de la quantité réelle d'eau, de verre et de liant rencontrée par l'onde, et, dans une moindre mesure, de la température et de l'humidité ambiantes.

En prenant en compte dans les calculs d'humidité le volume efficace du matelas ayant effectivement interagi avec l'onde incidente, il est possible de déterminer avec une grande précision la quantité d'eau dans le matelas, et donc de réguler plus efficacement les paramètres du procédé de fabrication du matelas pour assurer que toute l'eau soit éliminée dans le produit final. Pour des produits du type des liants alternatifs précités, plus particulièrement, une gestion précise de l'humidité en amont de l'étuve permet aussi d'améliorer les qualités intrinsèques du produit final, notamment ses propriétés mécaniques.

L'onde électromagnétique incidente est typiquement mais non limitativement une onde micro-ondes, c'est-à-dire une onde de fréquence comprise entre 1 et 300 GHz.

L'onde électromagnétique incidente est de préférence une onde de fréquence comprise entre 1 et 50 GHz, encore plus préférentiellement entre 1 et 10 GHz.

Selon un exemple de mise en oeuvre, une variation d'un paramètre de l'onde transmise par rapport à l'onde incidente est un décalage de phase.

Selon un autre exemple, une variation d'un paramètre de l'onde transmise par rapport à l'onde incidente est une modification d'amplitude.

Selon un exemple, la valeur représentative d'humidité dans le matelas de fibres correspond à la quantité d'eau réelle (par exemple exprimée en Kg) ayant interagi avec l'onde incidente (au cours de la traversée du matelas), dite ci-après quantité d'eau efficace.

Selon un exemple, le procédé comprend en outre une mesure d'une valeur représentative du grammage du matelas, avantageusement en aval de l'étuve et de préférence en bout de ligne, sur le produit final. Par grammage on entend la masse de verre et liant par unité de surface. Par valeur représentative du grammage, on entend le grammage ou toute valeur permettant d'obtenir une information sur ce grammage.

Selon un exemple, le procédé comprend en outre une mesure de l'épaisseur du matelas, ponctuellement ou avantageusement en temps réel et de façon continue, de préférence au droit de l'émetteur ou à proximité.

Selon un exemple, la détermination d'une valeur représentative d'humidité dans le matelas de fibres est fonction de la variation identifiée de l'onde, du grammage et de l'épaisseur du matelas.

La quantité d'eau efficace est par exemple déterminée par le biais d'une relation mathématique donnant la variation d'un paramètre de l'onde transmise par rapport à l'onde incidente en fonction d'au moins la quantité d'eau efficace, le grammage, et l'épaisseur du matelas, les coefficients de ladite relation étant déterminés préalablement par régression à partir d'une série de mesures réalisées avec des échantillons d'humidité relative, épaisseur et grammage connus ou mesurés, la quantité d'eau efficace étant fonction du volume efficace de matelas ayant effectivement interagi avec l'onde incidente.

Selon un mode de mise en oeuvre, la quantité d'eau efficace est approchée par une relation du type :

$$F = a.\ H + b.\ G + c.\ E + \delta \qquad\qquad (1)$$

Avec :

F la variation de l'onde
H la quantité d'eau efficace (en Kg)
G le grammage (en Kg/m$^2$)
E l'épaisseur (en m)

les coefficients a, b, c, $\delta$ étant déterminés préalablement par régression linéaire à partir d'une série de mesures réalisées avec des échantillons d'humidité relative, épaisseur et grammage connus ou mesurés, la quantité d'eau efficace étant fonction du volume efficace de matelas ayant effectivement interagi avec l'onde incidente.

Selon un autre mode de mise en oeuvre, la quantité d'eau peut être approchée par une régression non linéaire (polynomiale, exponentielle, etc.).

Plus précisément, la quantité d'eau efficace est calculée à partir de l'humidité relative, du grammage, de l'épaisseur et, conformément à l'invention, du volume efficace de matelas ayant effectivement interagi avec l'onde incidente, selon la relation suivante :

$$H = Hr\ .\ (G/E)/(1 - Hr)\ .\ V_{eff} \qquad\qquad (2)$$

Avec :

H la quantité d'eau efficace (en Kg)
Hr l'humidité relative (en %)
G le grammage (en Kg/m$^2$)
E l'épaisseur du matelas (en m)
Veff le volume efficace (en m$^3$)

Selon un exemple avantageux, le procédé de quantification d'humidité comprend en outre une mesure de la température et/ou de l'humidité ambiante. Autrement dit, la température et/ou l'humidité ambiante est/sont mesurée(s), de préférence à proximité de l'émetteur, et la détermination d'une valeur représentative d'humidité dans le matelas de fibres est réalisée en fonction également de cette/ces valeur(s) de température et/ou d'humidité. La quantité d'eau efficace est dans ce cas déterminée par le biais d'une relation du type :

$$F = a'. \; H + b'. \; G + c'. \; E + d'. \; T + e'. \; Ha + \delta' \qquad (1')$$

Avec :

F la variation de l'onde
H la quantité d'eau efficace (en Kg)
G le grammage (en Kg/m$^2$)
E l'épaisseur (en m)
T la température ambiante
Ha l'humidité ambiante

Selon un exemple, le procédé comprend une étape préalable d'étalonnage pour l'établissement d'une relation entre la variation d'un paramètre de l'onde transmise par rapport à l'onde incidente et une quantité d'eau réelle interagissant avec une onde électromagnétique incidente traversant le matelas, dite quantité d'eau efficace, ladite relation prenant en compte le volume efficace de matelas ayant effectivement interagi avec l'onde incidente.
Typiquement, l'étape d'étalonnage consiste à analyser une pluralité d'échantillons de matériau fibreux en déterminant, pour chacun :

- l'humidité relative, le grammage, l'épaisseur,
- une variation (déphasage et/ou variation d'amplitude de l'onde notamment) d'au moins un paramètre d'une onde électromagnétique le traversant
- le volume efficace de matériau fibreux effectivement traversé par l'onde

puis à déterminer, par régression multiparamètres (par exemple linéaire), une relation notamment du type (1) ou (1') ci-dessus entre la variation de l'onde, le grammage, l'épaisseur, et la quantité d'eau efficace, la quantité d'eau efficace étant calculée à partir de l'humidité relative, du grammage, de l'épaisseur et, conformément à l'invention, du volume efficace de matelas ayant effectivement interagi avec l'onde incidente.
Avantageusement, ladite relation peut également prendre en compte l'humidité et/ou la température ambiante.
Selon un exemple, l'étape d'étalonnage comprend une étape d'estimation par des essais ou par simulation numérique du volume efficace de matelas interagissant avec l'onde électromagnétique.
Selon l'invention, le volume efficace du matelas est défini par l'épaisseur du matelas et par une section efficace de matelas, définie en chaque point de l'épaisseur (dans chaque plan du matelas parallèle aux faces principales du matelas), correspondant à la section interagissant avec l'onde électromagnétique.
Ainsi, l'étape d'estimation du volume efficace de matelas comprend une étape d'estimation de la section efficace de matelas interagissant avec l'onde électromagnétique.
L'épaisseur du matelas peut être l'épaisseur nominale du matelas, connue au préalable en tant que paramètre de la ligne de fabrication, ou une épaisseur mesurée sur échantillon.
La section efficace peut être estimée par simulation numérique, ou par des essais expérimentaux.
Elle dépend :

- de la position relative de l'émetteur et du récepteur,
- la position du matelas entre l'émetteur et le récepteur, et
- de l'épaisseur du matelas.

Lors de l'étape d'étalonnage, l'un ou l'autre de ces paramètres ou les trois peuvent être pris en compte.

Il a été constaté que la section efficace est typiquement rectangulaire.

Le volume efficace peut être de section constante sur toute l'épaisseur du matelas.

Le volume efficace peut aussi présenter une section variable sur toute l'épaisseur du matelas. Dans ce cas, la section efficace est progressivement croissante sur au moins une partie de l'épaisseur du matelas : le volume efficace est évasé depuis l'émetteur en direction du récepteur, sur au moins une partie de l'épaisseur du matelas. Le volume efficace présente typiquement une forme générale de cône tronqué ou de double cône tronqué. A noter que par cône, on entend ici un cône de révolution, un cône pyramidal ou un cône quelconque. De préférence, la courbe directrice du cône est globalement une homothétie du contour de la surface émettrice (ci-après surface utile) de l'émetteur.

Selon un exemple, la section efficace est estimée par des essais expérimentaux de type « buvard », consistant à placer, entre l'émetteur et le récepteur, au moins un échantillon plan fibreux - aussi appelé buvard - dont on fait varier les dimensions (transversales, c'est à dire typiquement en longueur et/ou en largeur par exemple dans le cas d'un rectangle), à observer pour chaque configuration de l'échantillon, une variation caractéristique d'au moins un paramètre de l'onde transmise par rapport à l'onde incidente (l'évolution du déphasage ou de la modification d'amplitude de l'onde par exemple), et à en déduire les dimensions maximales du ou des échantillons pour lesquelles il existe une évolution dudit paramètre de l'onde (appelée section efficace).

De façon préférée, une pluralité d'échantillons empilés sont disposés entre l'émetteur et le récepteur, et les dimensions de chaque échantillon sont modifiées progressivement, un échantillon après l'autre, en observant à chaque fois une variation caractéristique de l'onde pour déterminer pour chaque échantillon la section maximale pour laquelle il existe une évolution.

Il a été déterminé expérimentalement que le volume efficace est avantageusement approximé par une succession de cônes tronqués disposés entre l'émetteur et le récepteur, ladite succession de cônes tronqués comprenant au moins deux cônes tronqués dont les grandes bases sont confondues l'une avec l'autre (formant une grande base commune). Selon une disposition particulière, ces deux cônes sont symétriques par rapport à leurs grandes bases (leur grande base commune) et leurs grandes bases sont équidistantes (leur grande base commune est équidistante) de l'émetteur et du récepteur.

S'il est souhaitable d'obtenir une valeur d'humidité relative, le procédé peut comprendre en outre une étape de recalcul de l'humidité relative du matelas (autrement dit le rapport exprimé en % de la masse d'eau contenue dans un échantillon de matelas à la masse totale de cet échantillon), prenant en compte la quantité d'eau efficace et un volume efficace du matelas ayant interagi avec l'onde électromagnétique incidente.

L'humidité relative est alors obtenue par la formule :

$$Hr = H/[H + (G/E) . V_{eff}] \qquad\qquad (3)$$

Avec :

Hr l'humidité relative (en %)
H la quantité d'eau efficace (en Kg)
G le grammage (en $Kg/m^2$)
E l'épaisseur du matelas (en m)
Veff le volume efficace (en $m^3$)

Selon un exemple de mise en oeuvre, le matelas de fibres est transporté par un premier organe de transport et par un deuxième organe de transport séparé du premier organe par une zone de mesure, et l'émetteur et le récepteur sont disposés respectivement au-dessus et en dessous du matelas, dans ladite zone de mesure.

Pour toute la suite de la description, on définit une direction latérale Y comme la direction orthogonale à la direction de défilement X du matelas et parallèle au plan de défilement. Une direction transversale Z est orthogonale à X et Y.

Dans la suite, une longueur est mesurée dans la direction de défilement X et une largeur, dans ladite direction latérale Y. Une hauteur ou une épaisseur est mesurée dans la direction transversale Z.

Selon un exemple, au moins deux sous-ensembles de mesure comprenant chacun un émetteur et un récepteur sont répartis dans la direction latérale du matelas, de préférence de part et d'autre d'un plan médian du matelas, autrement dit un plan orthogonal au plan de défilement et passant par son milieu.

Avantageusement, l'écartement entre les émetteurs de deux sous-ensembles de mesure adjacents est choisi pour éviter les interférences.

Par ailleurs, avantageusement, chaque sous-ensemble de mesure est de préférence situé à une distance d'une extrémité latérale du matelas égale à au moins une fois la dimension transversale maximale de l'émetteur, encore plus préférentiellement 1,5 fois cette dimension transversale maximale. Si par exemple l'émetteur est de section rectangulaire, il est de préférence situé à une distance du bord latéral du matelas au moins égale à la longueur de sa diagonale, encore plus préférentiellement au moins égale à 1,5 fois la longueur de sa diagonale.

Selon une configuration possible, trois sous-ensembles de mesure comprenant chacun un émetteur et un récepteur sont répartis sur la largeur du matelas, avec de préférence un sous-ensemble aligné avec le plan médian du matelas et les deux autres situés de part et d'autre dudit plan médian.

Selon une autre configuration possible, il peut être prévu de disposer des sous-ensembles de mesure régulièrement espacés sur toute la largeur du matelas, par exemple espacés d'une distance égale à 60 cm.

La localisation des points humides dans la largeur du loft permet soit de pouvoir contrôler les paramètres du procédé en amont de façon ciblée pour ajuster localement les propriétés du matelas, soit de sélectionner en aval des parties de produit à mettre au rebut. En effet, en sortie d'étuve, un matelas est typiquement découpé en deux ou quatre bandes de largeur égale respectivement à la moitié ou au quart de la largeur du matelas. La connaissance des points humides du matelas sur sa largeur permet de ne mettre au rebut que la ou les bandes jugées défectueuses.

Eventuellement, le procédé comprend la détermination d'un écart d'humidité entre au moins deux zones du matelas alignées dans la direction latérale, de préférence deux zones situées de part et d'autre du plan médian du matelas.

L'invention concerne également un procédé de fabrication d'un produit à base de fibres liées par un liant, comprenant une étape de fibrage, une étape d'ajout du liant, une étape de collecte et de convoyage des fibres imprégnées de liant, et une étape de réticulation du liant, le procédé comprenant en outre, avant l'étape de réticulation, une étape de quantification de l'humidité dans le matelas de fibres, utilisant le procédé décrit précédemment.

Selon un exemple, le procédé de fabrication comprend en outre une boucle de rétroaction agissant sur l'un des paramètres dudit procédé en fonction de l'humidité quantifiée du matelas.

Par exemple, le procédé comprend en outre une étape de régulation d'au moins un paramètre choisi parmi la composition du liant et notamment la proportion d'eau dans le liant, la quantité de liant, la température de réticulation, la durée de l'étape de réticulation, ou une vitesse ou un débit d'air imposé(e) lors de l'étape de réticulation, en fonction de l'humidité quantifiée du matelas.

Les fibres sont par exemple des fibres minérales, notamment de verre ou de roche, ou des fibres végétales, notamment de bois, de coton ou de chanvre.

L'invention dans ses détails sera mieux comprise à la lecture de la description qui suit d'une mise en oeuvre du présent procédé au sein d'une installation de fabrication d'un matelas de laine minérale. Dans le cadre de la présente invention, d'autres modes de réalisation sont bien entendu possibles, la description qui suit étant uniquement fournie à titre d'illustration et ne devant être considérée comme limitative sous aucun de ses aspects décrits.

La figure 1 représente une vue synoptique d'une installation de fabrication d'un matelas de laine minérale, incorporant la présente invention.

La figure 2 est une vue schématique plus détaillée des moyens de convoyage de l'installation de la figure 1.

La figure 3 est une vue en section selon le plan III de la figure 2.

La figure 4 illustre une variante de modélisation d'un volume efficace du matelas.

La figure 5 représente des résultats d'essai sous forme d'une courbe donnant le volume déterminé par la méthode des buvards en fonction de l'épaisseur du matelas, pour un positionnement donné émetteur/matelas/récepteur.

La figure 6 représente des résultats d'essai sous forme d'une courbe donnant le volume déterminé par la méthode des buvards en fonction de l'espacement relatif entre l'émetteur et le récepteur, pour une épaisseur de matelas donnée.

Les figures 7A et 7B illustrent (respectivement en perspective et vue selon la direction de défilement X) le volume efficace estimé lors d'essais du type « buvard », dans une configuration donnée.

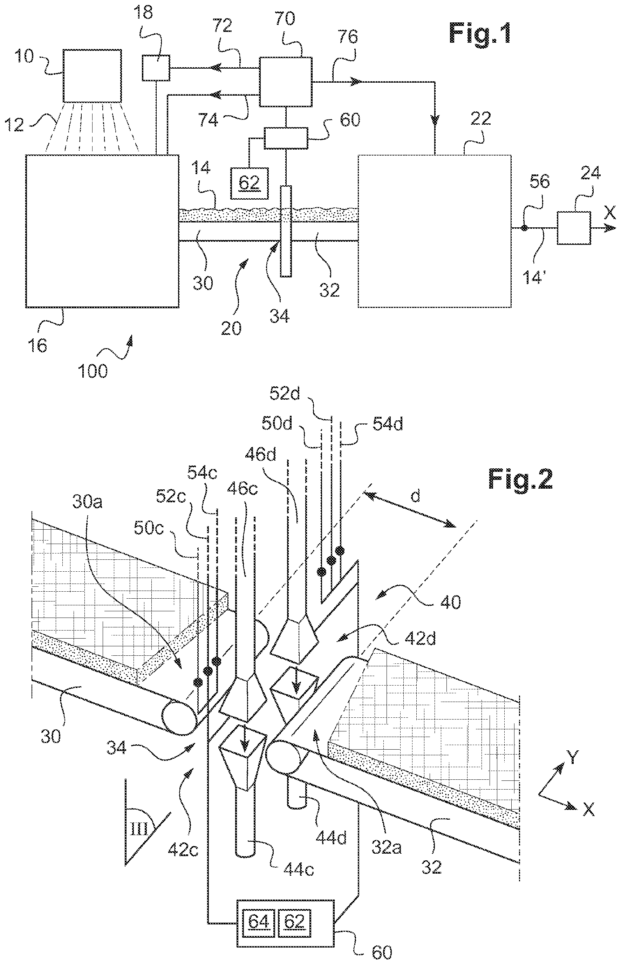

Sur la figure 1 est représentée schématiquement une installation 100 de fabrication de produits à base de fibres, notamment à base d'un matelas de laine minérale.

L'installation comprend un dispositif 10 de technologie connue, permettant le fibrage de la roche ou du verre.

Selon un procédé bien connu, une composition d'encollage ou liant est pulvérisée sur les fibres 12 ainsi obtenues, dans une chambre de réception 16, par des moyens dédiés 18 de mélange et d'injection des différents constituants (résine, eau, adjuvants, etc.). Puis les fibres sont collectées sous forme d'un matelas ou nappe 14, dans la chambre de réception 16, sur un convoyeur muni dans sa partie inférieure de caissons d'aspirations maintenus en dépression (non représentés).

Le matelas de fibres 14 est ensuite envoyé grâce à des moyens de convoyage 20 dans une étuve 22, où la température de l'air est par exemple de l'ordre de 300°C, avec une température au coeur du matelas avoisinant les 250°C.

Dans l'étuve, l'eau en excès est évaporée et le liant est polymérisé.

Le matelas de fibres 14' ainsi obtenu est ensuite transporté vers une unité 24 de préparation finale des produits résultants, comprenant par exemple une découpe du matelas de manière à obtenir des blocs qui pourront ensuite être disposés en plaques ou en rouleau, et éventuellement le conditionnement des plaques ou rouleaux ainsi obtenues, par exemple leur emballage par film plastique.

Selon l'invention, l'humidité dans le matelas est quantifiée de façon précise en amont de l'étuve de réticulation 22.

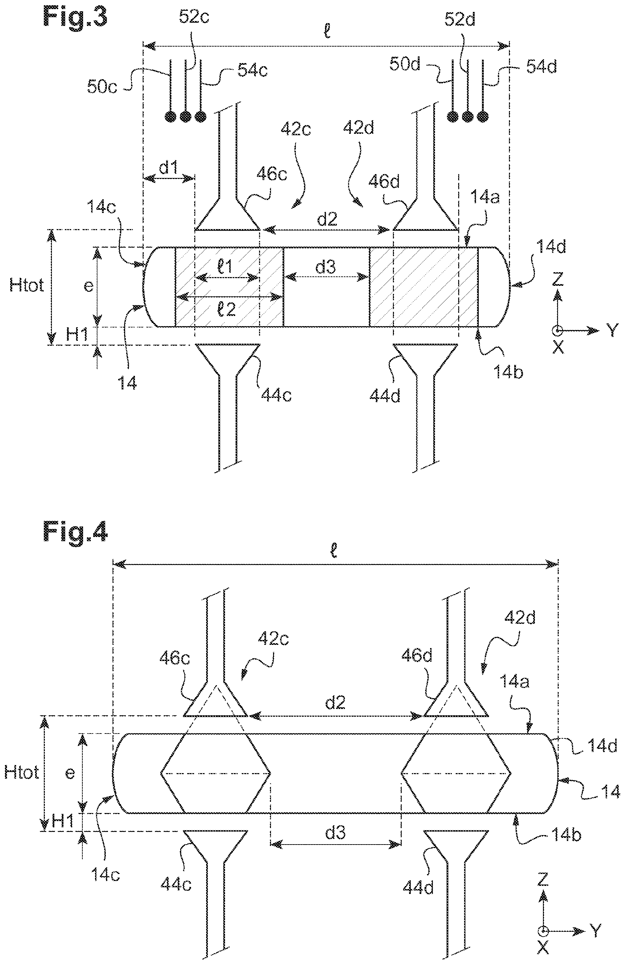

Cette quantification d'humidité est réalisée par un dispositif automatisé 40 décrit plus en détail dans la suite en référence aux figures 2 et 3, disposé avantageusement au niveau des moyens de convoyage 20.

Dans l'exemple illustré, le dispositif de quantification d'humidité comprend deux sous-ensembles de mesure 42c (à gauche) et 42d (à droite), permettant de quantifier l'humidité aux deux extrémités latérales du matelas. L'invention sera décrite dans la suite plus particulièrement en référence à l'un de ces sous-ensembles 42c. Toute la description correspondante sera évidemment transposable au second sous-ensemble 42d.

On notera par ailleurs que selon une variante, le dispositif pourrait également comprendre un nombre supérieur de sous-ensembles 42a...42n, répartis sur la largeur du matelas 14.

Comme illustré sur la figure 2, les moyens de convoyage 20 comprennent un premier et un deuxième organe de transport 30, 32 sous la forme de bandes sans fin montées autour d'axes parallèles, et entraînées par un moteur. Chacun comprend une face principale respectivement 30a, 32a, ici supérieure, destinée à supporter le matelas de fibres minérales 14. Il pourrait s'agir de manière équivalente de convoyeurs à chaînes ou à trains de rouleaux ou de tous autres moyens de transport adaptés.

Le premier et le deuxième convoyeur 30, 32 sont espacés l'un de l'autre, et séparés, dans la direction de défilement X du matelas, par une zone de mesure 34.

L'espacement entre le premier organe de transport et le deuxième organe de transport est référencé d sur la figure 2. Il est typiquement compris entre 10 et 30 cm.

Le matelas de fibres 14 se présente globalement sous la forme d'un ruban continu présentant deux faces principales 14a, 14b parallèles, dont l'une (14b) est au contact des convoyeurs 30, 32. Il présente une largeur l (comprise par exemple entre 1 et 3 mètres) et une épaisseur e (comprise par exemple entre 10 et 60 centimètres), telles qu'illustrées sur la figure 3.

On définit en tout point du matelas un plan de défilement tangent à l'une de ses faces principales 14a, 14b.

On définit par ailleurs localement une direction latérale Y comme la direction orthogonale à la direction de défilement X du matelas et parallèle audit plan de défilement au même point.

Dans l'exemple illustré, le sous-ensemble de mesure 42c (à gauche sur les figures 2 et 3) comprend, dans la zone de mesure 34:

- un émetteur 44c disposé en-dessous du matelas 14 (en regard de la face inférieure 14b sur les figures), au voisinage d'un bord latéral 14c du matelas, notamment à une distance d1 de ce bord, typiquement de l'ordre de 50cm, de préférence égale au moins à une fois la diagonale de l'émetteur, voire 1,5 fois,
- un récepteur 46c disposé du côté opposé du matelas (en regard de la face supérieure 14a sur les figures)
- un capteur de température ambiante 50c,
- un capteur d'humidité ambiante 52c, et
- un capteur d'épaisseur du matelas 54c.

Un capteur de grammage 56 est en outre prévu en aval de l'étuve de réticulation, pour mesure sur le produit fini (voir figure 1).

La figure 3 est une section selon le plan III de la figure 2, illustrant les dispositions précitées.

L'émetteur 44c est adapté pour émettre une onde micro-ondes incidente en direction du matelas.

Le récepteur 46c est placé en regard de l'émetteur 44c. Il est donc aligné avec l'émetteur 44c, dans une direction orthogonale au plan de défilement du matelas.

On notera que si, dans l'exemple illustré, l'émetteur est en-dessous du matelas et le récepteur au-dessus, une configuration inversée est également possible.

La distance Htot entre émetteur et récepteur est typiquement de l'ordre de 50 à 100 cm, de préférence entre 70 et 100 cm, par exemple comprise entre 90 et 100 cm.

La distance H1 entre la face inférieure du matelas et l'émetteur est par exemple comprise entre 0 et 10 cm.

Le récepteur 46c est adapté pour recevoir l'onde transmise en sortie du matelas et, dans l'exemple, pour identifier une variation d'un paramètre de l'onde, tel qu'un déphasage ou une variation d'amplitude.

Comme illustré sur la figure 2, le récepteur 46c, le capteur de température 50c, le capteur d'humidité 52c, le capteur d'épaisseur du matelas 54c et le capteur de grammage sont reliés à une unité de traitement de données 60, par exemple un ordinateur, dont le fonctionnement sera décrit plus en détail dans la suite.

L'unité de traitement de données 60 comprend ou est reliée à des données d'étalonnage 62, qui établissent une relation entre un déphasage de l'onde émise par l'émetteur 44c et/ou une variation de son amplitude, et la quantité d'eau ayant agi avec l'onde (quantité d'eau efficace).

Les données d'étalonnage 62 sont déterminées lors d'une étape d'étalonnage préalable, comprenant typiquement les étapes suivantes :

- <u>Etape 1</u> : on fournit une pluralité d'échantillons de matériau fibreux de grammage et d'épaisseur connus ou mesurés
Cette étape est réalisée, par produits, dans des gammes limitées d'épaisseur et de grammage définis.

- <u>Etape 2</u> : on détermine expérimentalement l'humidité relative de ces échantillons
Un exemple de protocole est décrit ci-après :

  1) on prélève un échantillon d'environ 50 à 80g,
  2) on introduit l'échantillon entier dans un sac plastique hermétique pour éviter les fluctuations d'humidité liées à l'évaporation,
  3) on extrait l'échantillon du sac puis on pèse son poids M1 (ou poids initial), de préférence avec une précision de 0.01 gramme,
  4) on place l'échantillon dans un four ventilé, pendant 1h $\pm$ 5min à 105°C $\pm$ 2°C,
  5) on extrait l'échantillon du four et on le fait sécher pendant 30 minutes dans un dessiccateur,
  6) on pèse une nouvelle fois l'échantillon afin de déterminer son poids M2,
  7) on calcule l'humidité relative Hr, exprimée en pourcents, par la formule :

$$Hr = (M1 - M2) / M1 . 100 \qquad (3)$$

- <u>Etape 3</u> : On soumet chaque échantillon au rayonnement d'une onde électromagnétique incidente et on identifie une variation d'au moins un paramètre de l'onde transmise par l'échantillon par rapport à l'onde incidente

- <u>Etape 4</u> : On estime le volume efficace de chaque échantillon

Le volume efficace est fonction de la hauteur du matelas et de la section efficace du matelas interagissant effectivement avec l'onde.
La hauteur du matelas est par exemple mesurée en temps réel, par un capteur de hauteur.
La section efficace peut, elle, être modélisée comme il sera décrit ci-après :
Un émetteur micro-ondes présente typiquement une section de forme carrée, de largeur l1. Comme variante, toutefois, l'émetteur peut présenter une section de forme quelconque.

Si l'on considère l'émetteur 44c sur la figure 3, le volume de matelas dont la section correspond à celle de l'émetteur est délimité par des traits discontinus. Il s'agit d'un parallélépipède rectangle de base l1xl1 et de hauteur e, correspondant à l'épaisseur du matelas.

En réalité, il a été constaté que l'onde incidente interagit avec des zones du matelas 14 situées hors de ce volume. On pourrait par exemple considérer que la section efficace est constante sur l'épaisseur du matelas, qu'elle est de même nature géométrique que la section de l'émetteur, mais qu'elle en est un agrandissement, comme illustré sur la figure 3.

La section efficace du matelas, de largeur l2>l1, peut être estimée par des mesures de type buvard telles que définies ci-après :
Partant de l'hypothèse ci-dessus que la section efficace du matelas est constante sur toute l'épaisseur du matelas, on peut par exemple déterminer cette section en plaçant successivement, entre l'émetteur et le récepteur, des échantillons plan fibreux - aussi appelés buvards - (plastifiés afin d'éviter l'évaporation) d'épaisseur égale à l'épaisseur du matelas mais de dimensions latérales de plus en plus grandes. En observant l'évolution du déphasage ou de la modification d'amplitude de l'onde (ou de toute autre variation caractéristique), on peut déterminer la section maximale pour laquelle il existe une évolution d'une des caractéristiques de l'onde (appelée section efficace). On comprend que pour tout échantillon de section plus grande que cette section efficace, l'onde interagit avec le matelas uniquement sur la portion de l'échantillon correspondant à cette section efficace, mais pas avec le reste de l'échantillon. Bien que l'échantillon soit de plus grande taille, la quantité d'eau traversée par l'onde reste donc la même.
De façon préférée, et en particulier dans les cas où la distance Htot entre émetteur(s) et récepteur(s) est supérieure à une valeur prédéterminée typiquement égale à 60 cm, le volume efficace sera estimé en considérant la section efficace comme étant variable sur l'épaisseur du matelas.
Dans ce cas, la section efficace est estimée dans une pluralité de plans parallèles aux faces principales du matelas : on dispose une pluralité d'échantillons en couches, entre l'émetteur et le récepteur, puis on fait varier les dimensions de chaque échantillon progressivement, un échantillon après l'autre, en observant à chaque fois l'évolution du déphasage ou de la modification d'amplitude de l'onde (ou de toute autre variation caractéristique) pour déterminer pour chaque échantillon la section maximale pour laquelle il existe une évolution.

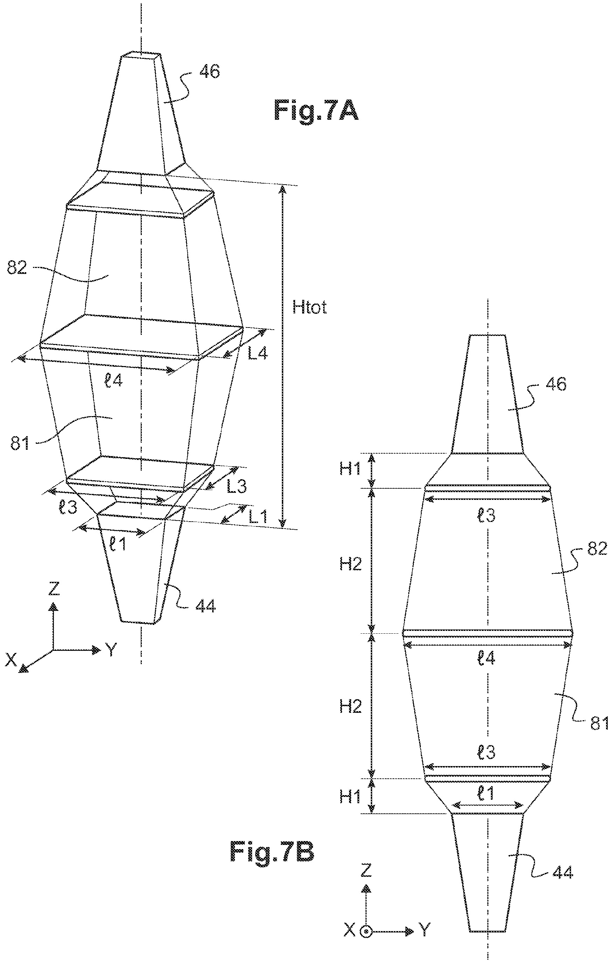

Il a été constaté qu'une modélisation optimale du volume efficace consiste en une double pyramide tronquée telle qu'illustrée sur la figure 4 ou encore sur les figures 7A et 7B.

A noter que le volume dépend de l'épaisseur du matelas d'une part, et de la distance relative entre l'émetteur et le récepteur et leur espacement par rapport au matelas d'autre part.

Les figures 7A et 7B donnent les résultats obtenus par des essais du type « buvard » décrits précédemment, dans une configuration de ligne donnée.

Dans cette configuration particulière, l'émetteur et le récepteur sont espacés d'une distance Htot égale à 96 cm.

L'émetteur et le récepteur ont des surfaces utiles en regard qui sont rectangulaires, de largeur l1 égale à 92 cm (mesurée dans la direction latérale) et de longueur L1 égale à 125 cm (mesurée dans la direction défilement).

Dans l'exemple, la distance H1 entre la face inférieure du matelas et la surface utile de l'émetteur est égale à 10 cm.

Le volume traversé par l'onde incidente est approximé par une double pyramide à bases rectangulaires, tronquée, et centrée sur un même axe transversal parallèle à l'axe Z reliant l'émetteur et le récepteur.

Dans l'exemple, cette double pyramide tronquée se décompose de la façon suivante :

- Une première pyramide tronquée 81 de hauteur H2 égale à 38 cm, dont

    o la petite base est confondue avec la face inférieure du matelas (et donc parallèle aux faces principales 30a, 32a des convoyeurs 30, 32) et présente une largeur l3 égale à 20 cm et une longueur L3 égale à 15cm
    o la grande base présente une largeur l4 égale à 28 cm et une longueur L4 égale à 21 cm.

Une deuxième pyramide tronquée 82, de mêmes dimensions que la première pyramide, la première et la deuxième pyramides étant symétriques par rapport à leur grande base commune.

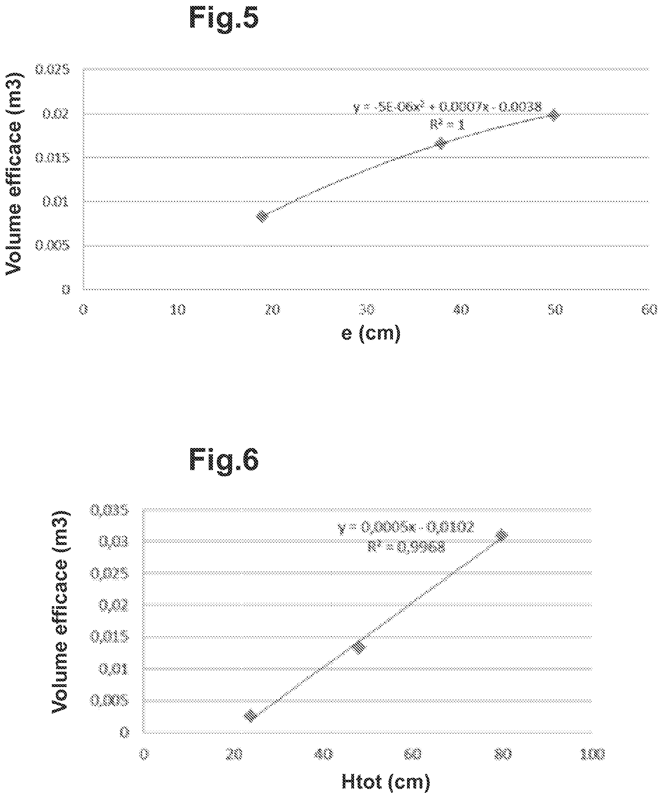

La figure 5 représente des résultats d'essai sous forme d'une courbe donnant le volume déterminé par la méthode des buvards en fonction de l'épaisseur du matelas, pour un positionnement donné émetteur/matelas/récepteur.

La figure 6 représente des résultats d'essai sous forme d'une courbe donnant le volume efficace total déterminé par la méthode des buvards en fonction de l'espacement relatif entre l'émetteur et le récepteur.

- Etape 5 : On détermine la quantité d'eau efficace ayant interagi avec l'onde par la formule

$$H = Hr \ . \ (G/E)/(1 - Hr) \ . \ Veff \qquad (2)$$

Avec :

H la quantité d'eau efficace (en Kg)
Hr l'humidité relative (en %)
G le grammage (en Kg/m$^2$)
E l'épaisseur du matelas (en m)
Veff le volume efficace (en m$^3$)

- Etape 6 : On compile l'ensemble des résultats et par exemple par régression linéaire, on détermine avantageusement une relation du type

$$F = a' \ . \ H + b' \ . \ G + c' \ . \ E + d' \ . \ T + e' \ . \ Ha + \delta' \qquad (1')$$

Avec :

F la variation de l'onde
H la quantité d'eau efficace (en Kg)
G le grammage (en Kg/m$^2$)
E l'épaisseur (en m)
T la température ambiante
Ha l'humidité ambiante
On réalise typiquement cette régression linéaire par produits, autrement dit une régression pour une combinaison donnée de grammage/épaisseur/humidité dans une gamme définie.

L'unité de traitement 60 comprend des moyens de calcul 64 utilisant ces données d'étalonnage, et notamment la relation (1') ci-dessus, pour calculer en temps réel, en fonction de l'épaisseur, du grammage, de la température et de l'humidité ambiante, et des variations d'au moins un paramètre de l'onde incidente émise par l'émetteur 44c, la quantité d'eau efficace effectivement traversée par l'onde incidente.

Le procédé de quantification de l'humidité dans le matelas est finalement réalisé de la façon suivante : Lorsqu'une onde incidente est émise par un émetteur 44c, 44d, le récepteur correspondant 46c, 46d acquiert le signal correspondant à l'onde transmise, et détermine le déphasage ou la variation d'amplitude de l'onde. Dans le même temps, la température et l'humidité ambiante sont mesurées par les capteurs 50c, 50d ; 52c, 52d. Ces informations sont envoyées à l'unité de traitement des données 60, qui, à l'aide des moyens de calcul 64, détermine la quantité d'eau efficace.

Après traitement par l'unité 60, l'information sur l'humidité est transmise à un dispositif de contrôle 70 qui est alors susceptible de modifier en continu et dans un délai très bref au moins un des paramètres agissant sur une étape du procédé de fabrication, par exemple via des lignes de commande 72, 74, 76. Ledit paramètre peut être par exemple, mais non limitativement, la quantité de liant injectée, la composition initiale du mélange et notamment la quantité d'eau présente avec la résine (ligne de commande 72), la température de l'étuve ou le temps de passage dans l'étuve (ligne 76), la vitesse ou débit d'air de l'étuve, etc...

Dans l'exemple illustré, la présence de deux sous-ensembles de mesure 42c, 42d permet de déterminer un écart droite/gauche d'humidité dans le matelas, et ainsi d'évaluer l'homogénéité de la production.

Avantageusement, les deux sous-ensembles sont parfaitement symétriques par rapport à un plan médian du matelas. Par exemple, la distance entre les récepteurs 46c, 46d est avantageusement identique à celle d2 séparant les deux émetteurs 44c, 44d.

Aussi, avantageusement, la distance d2 séparant les deux émetteurs 44c, 44d est choisie de façon à éviter les interférences entre les ondes émanant de chaque émetteur (distance d3 entre les volumes efficaces des sous-ensembles 42c, 42d supérieure à 0, voir figures 3 ou 4).

**Revendications**

1. Procédé de quantification de l'humidité dans un matelas de fibres (14), comprenant :

   - l'émission d'une onde électromagnétique incidente en direction du matelas, par au moins un émetteur (44c, 44d),
   - la réception de l'onde électromagnétique transmise par le matelas, par au moins un récepteur,
   - l'identification d'une variation d'au moins un paramètre de l'onde transmise par rapport à l'onde incidente, le procédé étant **caractérisé par** l'étape suivante:

      - la détermination d'une valeur représentative de l'humidité dans le matelas de fibres, en fonction de ladite variation et du volume efficace de matelas ayant effectivement interagi avec l'onde incidente, dans lequel le volume efficace est défini par l'épaisseur du matelas et par une section efficace de matelas, définie en chaque point de l'épaisseur dans chaque plan du matelas parallèle aux faces principales du matelas, correspondant à la section interagissant avec l'onde électromagnétique.

2. Procédé selon la revendication 1, dans lequel l'onde incidente est une onde micro-onde.

3. Procédé selon la revendication 1 ou 2, dans lequel une variation d'un paramètre de l'onde transmise par rapport à l'onde incidente est un décalage de phase.

4. Procédé selon l'une quelconque des revendications 1 à 3, dans lequel une variation d'un paramètre de l'onde transmise par rapport à l'onde incidente est une modification d'amplitude.

5. Procédé selon l'une quelconque des revendications 1 à 4, dans lequel la valeur représentative de l'humidité dans le matelas de fibres correspond à la quantité d'eau réelle ayant interagi avec l'onde incidente, dite quantité d'eau efficace

6. Procédé selon la revendication 5, dans lequel la quantité d'eau efficace est déterminée par le biais d'une relation mathématique donnant la variation d'un paramètre de l'onde transmise par rapport à l'onde incidente en fonction d'au moins la quantité d'eau efficace, le grammage, et l'épaisseur du matelas, les coefficients de ladite relation étant déterminés préalablement par régression à partir d'une série de mesures réalisées avec des échantillons d'humidité relative, épaisseur et grammage connus ou mesurés, la quantité d'eau efficace étant fonction du volume efficace de matelas ayant effectivement interagi avec l'onde incidente.

7. Procédé selon l'une quelconque des revendications 1 à 6, comprenant en outre une mesure du grammage du matelas.

8. Procédé selon l'une quelconque des revendications 1 à 7, comprenant en outre une mesure de l'épaisseur du matelas.

9. Procédé selon l'une quelconque des revendications 1 à 8, comprenant en outre une mesure de l'humidité et/ou de la température ambiante.

10. Procédé selon l'une quelconque des revendications 1 à 9, comprenant une étape préalable d'étalonnage pour l'établissement d'une relation entre la variation d'un paramètre de l'onde transmise par rapport à l'onde incidente et une quantité d'eau réelle interagissant avec une onde électromagnétique incidente traversant le matelas, dite quantité d'eau efficace, ladite relation prenant en compte le volume efficace de matelas ayant effectivement interagi avec l'onde incidente.

11. Procédé selon la revendication 10, dans lequel l'étape d'étalonnage comprend une étape d'estimation par des essais ou par simulation numérique du volume efficace de matelas interagissant avec l'onde électromagnétique.

12. Procédé selon la revendication 11, dans lequel l'étape d'estimation du volume efficace de matelas comprend une étape d'estimation par des essais ou par simulation numérique de la section efficace de matelas interagissant avec l'onde électromagnétique.

13. Procédé selon la revendication 11 ou 12, dans lequel le volume efficace présente une section variable sur toute l'épaisseur du matelas.

14. Procédé selon la revendication 11 ou 12, dans lequel le volume efficace présente une forme générale de cône tronqué ou de double cône tronqué.

15. Procédé selon l'une quelconque des revendications 1 à 14, dans lequel le matelas de fibres est transporté par un premier organe de transport (30) et par un deuxième organe de transport (32) séparé du premier organe par une zone de mesure (34), et l'émetteur et le récepteur sont disposés respectivement au-dessus et en dessous du matelas, dans ladite zone de mesure.

16. Procédé selon l'une quelconque des revendications 1 à 15, dans lequel le matelas de fibres se déplace selon un plan de défilement (X, Y) et une direction de défilement (X) et au moins deux sous-ensembles de mesure (42c, 42d) comprenant chacun un émetteur (44c, 44d) et un récepteur (46c, 46d) sont répartis dans une direction latérale du matelas orthogonale à la direction de défilement (X) et parallèle au plan de défilement.

17. Procédé selon la revendication 16, comprenant la détermination d'un écart d'humidité entre au moins deux zones du matelas alignées dans la direction latérale, de préférence réparties de part et d'autre d'un plan médian du matelas

18. Procédé de fabrication d'un produit à base de fibres liées par un liant, comprenant une étape de fibrage, une étape d'ajout du liant, une étape de collecte et de convoyage des fibres imprégnées de liant, et une étape de réticulation du liant, le procédé comprenant en outre, avant l'étape de réticulation, une étape de quantification de l'humidité dans le matelas de fibres, utilisant le procédé selon l'une des revendications précédentes.

19. Procédé selon la revendication 18, comprenant en outre une étape de régulation d'au moins un paramètre choisi parmi la composition du liant et notamment la proportion d'eau dans le liant, la quantité de liant, la température de réticulation, la durée de l'étape de réticulation, ou une vitesse ou un débit d'air imposé(e) lors de l'étape de réticulation, en fonction de l'humidité quantifiée du matelas.

20. Procédé selon la revendication 18 ou 19, dans lequel les fibres sont des fibres de verre, de roche, de bois, de coton ou de chanvre.

**Patentansprüche**

1. Verfahren zum Quantifizieren von Feuchtigkeit in einer Fasermatte (14), umfassend:

   - Aussenden einer in Richtung der Matte einfallenden elektromagnetischen Welle durch mindestens einen Sender (44c, 44d),
   - Empfangen der durch die Matte gesendeten elektromagnetischen Welle durch mindestens einen Empfänger,
   - Identifizieren einer Veränderung von mindestens einem Parameter der gesendeten Welle in Bezug auf die einfallende Welle, wobei das Verfahren **gekennzeichnet ist durch** den folgenden Schritt:

   - Bestimmen eines für die Feuchtigkeit in der Fasermatte repräsentativen Werts in Abhängigkeit von der Veränderung und dem effektiven Volumen der Matte, das in der Tat mit der einfallenden Welle interagiert hat, wobei das effektive Volumen durch die Dicke der Matte und durch einen effektiven Querschnitt der Matte definiert ist, der an jedem Punkt der Dicke in jeder Ebene der Matte parallel zu den Hauptflächen der Matte definiert ist, entsprechend dem Querschnitt, der mit der elektromagnetischen Welle interagiert.

2. Verfahren nach Anspruch 1, wobei die einfallende Welle eine Mikrowelle ist.

3. Verfahren nach Anspruch 1 oder 2, wobei eine Veränderung eines Parameters der gesendeten Welle in Bezug auf die einfallende Welle eine Phasenverschiebung ist.

4. Verfahren nach einem der Ansprüche 1 bis 3, wobei eine Veränderung eines Parameters der gesendeten Welle in Bezug auf die einfallende Welle eine Amplitudenänderung ist.

5. Verfahren nach einem der Ansprüche 1 bis 4, wobei der für die Feuchtigkeit in der Fasermatte repräsentative Wert der tatsächlichen Wassermenge entspricht, die mit der einfallenden Welle interagiert hat, genannt effektive Wassermenge.

6. Verfahren nach Anspruch 5, wobei die effektive Wassermenge über eine mathematische Beziehung bestimmt wird, die die Veränderung eines Parameters der gesendeten Welle in Bezug auf die einfallende Welle in Abhängigkeit von mindestens der effektiven Wassermenge, dem Flächengewicht und der Dicke der Matte angibt, wobei die Koeffizienten der Beziehung zuvor durch Regression aus einer Reihe von Messungen bestimmt werden, die mit Proben mit bekannter/bekanntem oder gemessener/gemessenem relativer Luftfeuchtigkeit, Dicke und Flächengewicht durchgeführt werden, wobei die effektive Wassermenge von dem effektiven Volumen der Matte abhängig ist, das in der Tat mit der einfallenden Welle interagiert hat.

7. Verfahren nach einem der Ansprüche 1 bis 6, umfassend außerdem eine Messung des Flächengewichts der Matte.

8. Verfahren nach einem der Ansprüche 1 bis 7, umfassend außerdem eine Messung der Dicke der Matte.

9. Verfahren nach einem der Ansprüche 1 bis 8, umfassend außerdem eine Messung der Luftfeuchtigkeit und/oder der Umgebungstemperatur.

10. Verfahren nach einem der Ansprüche 1 bis 9, umfassend einen vorherigen Kalibrierungsschritt für die Herstellung einer Beziehung zwischen der Veränderung eines Parameters der gesendeten Welle in Bezug auf die einfallende Welle und einer tatsächlichen Wassermenge, die mit einer einfallenden elektromagnetischen Welle, die durch die Matte hindurchgeht, genannt effektive Wassermenge, interagiert, wobei die Beziehung das effektive Volumen der Matte berücksichtigt, das in der Tat mit der einfallenden Welle interagiert hat.

11. Verfahren nach Anspruch 10, wobei der Kalibrierungsschritt einen Schritt umfasst, wobei das effektive Volumen der Matte, das mit der elektromagnetischen Welle interagiert, durch Versuche oder durch numerische Simulation geschätzt wird.

12. Verfahren nach Anspruch 11, wobei der Schritt zum Schätzen des effektiven Volumens der Matte einen Schritt zum Schätzen des effektiven Querschnitts der Matte, der mit der elektromagnetischen Welle interagiert, durch Versuche oder durch numerische Simulation umfasst.

13. Verfahren nach Anspruch 11 oder 12, wobei das effektive Volumen einen variablen Querschnitt über die gesamte Dicke der Matte aufweist.

14. Verfahren nach Anspruch 11 oder 12, wobei das effektive Volumen eine allgemeine Form eines Kegelstumpfes oder eines doppelten Kegelstumpfes aufweist.

15. Verfahren nach einem der Ansprüche 1 bis 14, wobei die Fasermatte durch ein erstes Förderelement (30) und durch ein zweites Förderelement (32), das von dem ersten Element durch einen Messbereich (34) getrennt ist, gefördert wird und der Sender und der Empfänger oberhalb beziehungsweise unterhalb der Matte in dem Messbereich angeordnet sind.

16. Verfahren nach einem der Ansprüche 1 bis 15, wobei sich die Fasermatte in einer Laufebene (X, Y) und einer Laufrichtung (X) bewegt und mindestens zwei Messuntereinheiten (42c, 42d), umfassend jeweils einen Sender (44c, 44d) und einen Empfänger (46c, 46d), in einer Querrichtung der Matte verteilt sind, die orthogonal zu der Laufrichtung (X) und parallel zu der Laufebene verläuft.

17. Verfahren nach Anspruch 16, umfassend das Bestimmen eines Feuchtigkeitsunterschieds zwischen mindestens zwei in der Querrichtung ausgerichteten Bereichen der Matte, die vorzugsweise auf beiden Seiten einer Mittelebene der Matte verteilt sind.

18. Verfahren zum Fertigen eines Produkts auf Basis von Fasern, die durch ein Bindemittel gebunden sind, umfassend einen Schritt eines Zerfaserns, einen Schritt eines Zugebens des Bindemittels, einen Schritt eines Sammelns und Transportierens der mit Bindemittel imprägnierten Fasern und einen Schritt eines Vernetzens des Bindemittels, das Verfahren vor dem Schritt des Vernetzens außerdem umfassend einen Schritt des Quantifizierens der Feuchtigkeit in der Fasermatte, der das Verfahren nach einem der vorstehenden Ansprüche verwendet.

19. Verfahren nach Anspruch 18, umfassend außerdem einen Schritt zum Regulieren mindestens eines Parameters, der aus der Zusammensetzung des Bindemittels und insbesondere dem Wasseranteil in dem Bindemittel, der Menge des Bindemittels, der Vernetzungstemperatur, der Dauer des Vernetzungsschritts oder einer/einem während des Vernetzungsschritts vorgeschriebenen Luftgeschwindigkeit oder Luftdurchsatz in Abhängigkeit von der quantifizierten Feuchtigkeit der Matte ausgewählt wird.

20. Verfahren nach Anspruch 18 oder 19, wobei die Fasern Glas-, Stein-, Holz-, Baumwoll- oder Hanffasern sind.

**Claims**

1. A process for quantifying the moisture in a blanket of fibers (14), comprising:

   - the emission of an incident electromagnetic wave towards the blanket, by at least one emitter (44c, 44d),
   - the receiving of the electromagnetic wave transmitted through the blanket, by at least one receiver,
   - the identification of a variation of at least one parameter of the transmitted wave relative to the incident wave,

   Wherein said process is **characterized in that** it comprises the following step:

   - the determination of a representative value of the moisture in the blanket of fibers, as a function of said variation and of the effective volume of blanket that has actually interacted with the incident wave, wherein the effective volume of the blanket is defined by the thickness of the blanket and by an effective blanket cross section, defined at each point of the thickness in each plane of the blanket parallel to the main faces of the blanket, corresponding to the cross section that interacts with the electromagnetic wave.

2. The process as claimed in claim 1, wherein the incident wave is a microwave.

3. The process as claimed in claim 1 or 2, wherein a variation of one parameter of the transmitted wave relative to the incident wave is a phase shift.

4. The process as claimed in any one of claims 1 to 3, wherein a variation of one parameter of the transmitted wave relative to the incident wave is a change in amplitude.

5. The process as claimed in any one of claims 1 to 4, wherein the representative value of the moisture in the blanket of fibers corresponds to the actual amount of water that has interacted with the incident wave, referred to as effective amount of water.

6. The process as claimed in claim 5, wherein the effective amount of water is determined by means of a mathematical relationship giving the variation of one parameter of the transmitted wave relative to the incident wave as a function of at least the effective amount of water, the grammage, and the thickness of the blanket, the coefficients of said relationship being determined previously by regression from a series of measurements carried out with samples of known or measured relative humidity, thickness and grammage, the effective amount of water being a function of the effective volume of blanket that has actually interacted with the incident wave.

7. The process as claimed in any one of claims 1 to 6, further comprising a measurement of the grammage of the blanket.

8. The process as claimed in any one of claims 1 to 7, further comprising a measurement of the thickness of the blanket.

9. The process as claimed in any one of claims 1 to 8, further comprising a measurement of the ambient humidity and/or ambient temperature.

10. The process as claimed in any one of claims 1 to 9, comprising a prior calibration step for establishing a relationship between the variation of one parameter of the transmitted wave relative to the incident wave and an actual amount of water interacting with an incident electromagnetic wave passing through the blanket, referred to as effective amount of water, said relationship taking into account the effective volume of blanket that has actually interacted with the incident wave.

11. The process as claimed in claim 10, wherein the calibration step comprises a step of estimating, by tests or by numerical simulation, the effective volume of blanket interacting with the electromagnetic wave.

12. The process as claimed in claim 11, wherein the step of estimating the effective volume of blanket comprises a step of estimating, by tests or by numerical simulation, the effective blanket cross section interacting with the electromagnetic wave.

13. The process as claimed in claim 11 or 12, wherein the effective volume has a variable cross section over the entire thickness of the blanket.

14. The process as claimed in claim 11 or 12, wherein the effective volume has a general truncated cone or double truncated cone shape.

15. The process as claimed in any one of claims 1 to 14, wherein the blanket of fibers is transported by a first transport member (30) and by a second transport member (32) separated from the first member by a measuring zone (34), and the emitter and the receiver are positioned respectively above and below the blanket, in said measuring zone.

16. The process as claimed in any one of claims 1 to 15, wherein the blanket of fibers moves along a run plane (X, Y) and a run direction (X) and at least two measuring subassemblies (42c, 42d) each comprising an emitter (44c, 44d) and a receiver (46c, 46d) are distributed in a lateral direction of the blanket orthogonal to the run direction (X) and parallel to the run plane.

17. The process as claimed in claim 16, comprising the determination of a moisture difference between at least two zones of the blanket that are aligned in the lateral direction, preferably distributed on either side of a median plane of the blanket.

18. A process for manufacturing a product based on fibers bound by a binder, comprising a fiberizing step, a step of adding the binder, a step of collecting and conveying the binder-impregnated fibers, and a step of crosslinking the binder, the process further comprising, before the crosslinking step, a step of quantifying the moisture in the blanket of fibers, using the process as claimed in one of the preceding claims.

19. The process as claimed in claim 18, further comprising a step of regulating at least one parameter chosen from the composition of the binder and in particular the proportion of water in the binder, the amount of binder, the crosslinking temperature, the duration of the crosslinking step, or a speed or flow rate of air imposed during the crosslinking step, as a function of the quantified moisture of the blanket.

20. The process as claimed in claim 18 or 19, wherein the fibers are glass, rock, wood, cotton, or hemp fibers.

**Fig.1**

**Fig.2**

# Fig.3

# Fig.4

## Fig.5

$y = -5E-06x^2 + 0,0007x - 0,0038$
$R^2 = 1$

## Fig.6

$y = 0,0005x - 0,0102$
$R^2 = 0,9968$

Fig.7A

46

82

Htot

L4

ℓ4

81

L3

ℓ3

L1

ℓ1

Z

X Y

44

46

H1

ℓ3

H2

82

ℓ4

H2

81

ℓ3

H1

ℓ1

Fig.7B

Z

X Y

44

**EP 3 652 525 B1**

## RÉFÉRENCES CITÉES DANS LA DESCRIPTION

**Documents brevets cités dans la description**

- WO 2006023137 A